# EUROPEAN PATENT APPLICATION

(11) **EP 2 605 529 A2**
(43) Date of publication of application: **19.06.2013**
(21) Application number: 12182854.5
(22) Date of filing: 03.09.2012
(51) Int. Cl.: H04N 21/436, H04N 21/61, H04H 60/49, H04H 60/65, H04H 60/42

(54) **Image processing apparatus with wireless communications unit and control method thereof**

(30) Priority: 14.12.2011 KR 20110134237
(71) Applicant: Samsung Electronics Co., Ltd., Gyeonggi-do 443-742 (KR)
(72) Inventor: Kim, Deok-nam, Gyeonggi-do (KR); Park, Si-hyun, Gyeonggi-do (KR); Shim, Seung-seop, Gyeonggi-do (KR)
(74) Representative: Clark, David James

(57) **Abstract**

An image processing apparatus includes: an image receiver which receives an image signal from an image supply source; an image processor which processes the image signal received by the image receiver to display an image; a communication unit which is wirelessly connected to an access point corresponding to a preset frequency channel to enable communication with an external network; and a controller which determines at least one frequency channel corresponding to territorial identification information extracted from the image signal received by the image receiver, and controls wireless communication of the communication unit to the access point through the at least one determined frequency channel.

## Description

### BACKGROUND

### Field

Apparatuses and methods consistent with the exemplary embodiments relate to an image processing apparatus and a control method thereof which processes an image signal received from the outside to display an image, and more particularly, to an image processing apparatus and a control thereof which is connected to an external network for wireless communication.

### Description of the Related Art

An image processing apparatus processes an image signal/image data that is input by an external image supply source by various methods to display an image. The image processing apparatus displays an image on an image panel provided therein with the processed image data, or outputs the processed image data to an additional display apparatus including an image panel to display image in the display apparatus. The image processing apparatus which is provided to general users includes a TV for the former case and a set-top box for the latter case.

In line with technical development and to meet users' demand, the image processing apparatus may include a function of processing various data/information/applications for a user beyond simply processing an image based on an image signal transmitted by an image supply source. As an environment for providing the various functions, the image processing apparatus is connected to an external network such as the Internet and transmits and receives unlimited data/information/applications through communication with various servers or clients connected to the same network.

The image processing apparatus may be connected to the network through a cable, but such wired connection may not be convenient in the aspect of installation if various home appliances are connected to a single network such as home network. In consideration of the foregoing, technology of wirelessly connecting the image processing apparatus to the network has been applied recently. In this case, the image processing apparatus is connected to the network for communication through wireless connection through a particular frequency channel.

### SUMMARY

The foregoing and/or other aspects may be achieved by providing an image processing apparatus including: an image receiver which receives an image signal from an image supply source; an image processor which processes the image signal received by the image receiver to display an image; a communication unit which is wirelessly connected to an access point corresponding to a preset frequency channel to enable communication with an external network; and a controller which determines at least one frequency channel corresponding to territorial identification information extracted from the image signal received by the image receiver, and controls wireless communication of the communication unit to the access point through the at least one determined frequency channel.

The controller may scan a frequency channel that may be connected to the access point, out of the at least one determined frequency channel, and may be connected to the access point for communication through the frequency channel according to the scanning result.

The image processing apparatus may further include a storage unit which stores therein database including a plurality of territorial identification information and at least one frequency channel corresponding to each of the plurality of territorial identification information, wherein the controller may search the at least one frequency channel corresponding to the territorial identification information extracted from the image signal, in the database of the storage unit.

The wireless communication of the communication unit to the access point may be based on an infrastructure mode according to Wi-Fi protocol.

The territorial identification information may include a country code.

The image signal which is received by the image receiver may include a digital broadcasting signal transmitted by transmission equipment of a broadcasting station, and the controller may determine the country code from a territorial code field within a country availability descriptor of the digital broadcasting signal.

The image processing apparatus may further include a display unit which displays an image by using the image signal processed by the image processor.

Another aspect of the present invention may be achieved by providing a control method of an image processing apparatus including: receiving an image signal from an image supply source and processing the image signal to display an image; extracting territorial identification information from the image signal and determining at least one frequency channel corresponding to the extracted territorial identification information; and wirelessly connecting to an access point, which relays communication between the image processing apparatus and an external network, through the at least one determined frequency channel.

The wirelessly connecting to the access point through the at least one determined frequency channel may include scanning a frequency channel that may be connected to the access point, out of the at least one determined frequency channel; and connecting to the access point for communication through the frequency channel according to the scanning result.

The determining at least one frequency channel corresponding to the extracted territorial identification information may include searching at least one frequency channel corresponding to the territorial identification information extracted from the image signal, in database including a plurality territorial identification information and at least one frequency channel corresponding to each of the plurality of territorial identification information.

The wireless communication of the communication unit to the access point may be performed in an infrastructure mode according to Wi-Fi protocol.

The territorial identification information may include a country code.

The image signal which is received by the image receiver may include a digital broadcasting signal transmitted by transmission equipment of a broadcasting station, and the determining the at least one frequency channel corresponding to the extracted territorial identification information may include determining the country code from a territorial code field within a country availability descriptor of the digital broadcasting signal.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram of an image processing apparatus according to an exemplary embodiment of the present invention;
FIG. 2 illustrates an example of wireless communication by an electronic device based on a Wi-Fi protocol;
FIG. 3 illustrates an example of connecting the image processing apparatus in FIG. 1 to an access point; and
FIG. 4 is a control flowchart of a control method of the image processing apparatus in FIG. 1.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

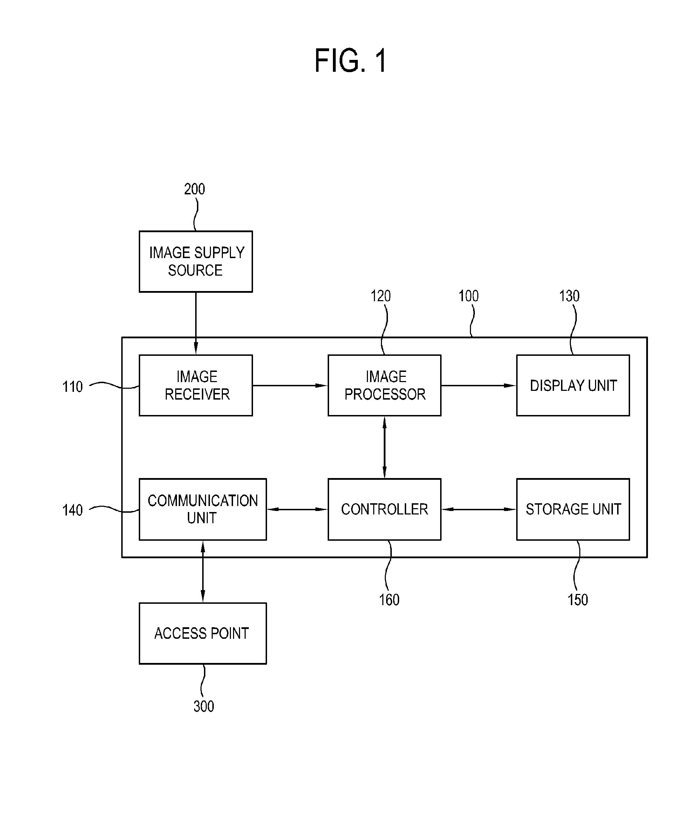

FIG. 1 is a block diagram of an image processing apparatus 100 according to an exemplary embodiment of the present invention.

As shown therein, the image processing apparatus 100 according to a present exemplary embodiment includes a TV which displays an image therein based on an image signal received from an image supply source 200, but not limited thereto. The image processing apparatus 100 may include other display apparatuses which may display an image such as a portable multimedia player (PMP), or a mobile phone. The image processing apparatus 100 may include a device which does not display an image therein but outputs the image signal to another device for display, e.g., a set-top box.

The image supply source 200 transmits an image signal to the image processing apparatus 100 in wired/wireless manner. According to the present exemplary embodiment, the image supply source 200 includes transmission equipment of a broadcasting station, which transmits a digital broadcasting signal to the image processing apparatus 100 by airwave or through a cable. The image processing apparatus 100 processes the digital broadcasting signal to display a broadcasting image.

The image processing apparatus 100 may be connected to a network such as the Internet based on a preset wireless communication protocol and transmit and receive data/signals/information to/from various servers (not shown) or clients (not shown) connected to the same network.

According to the present exemplary embodiment, the image processing apparatus 100 is connected to an external network according to Wi-Fi wireless communication protocol. To do the foregoing, the image processing apparatus 100 is connected to the network for communication through an external access point 300. The detailed configuration for wireless communication of the image processing apparatus 100 based on Wi-Fi through the access point 300 will be described later.

Hereinafter, each element of the image processing apparatus 100 will be described.

The image processing apparatus 100 includes an image receiver 110 which receives an image signal from the image supply source 200, an image processor 120 which processes an image signal transmitted to the image receiver 100 by various image processing operations, a display unit 130 which displays an image thereon with the image signal processed by the image processor 120, a communication unit 140 which communicates with the access point 300, a storage unit 150 which stores therein unlimited signals/data/information, and a controller 160 which controls operations of the image processing apparatus 100.

The image receiver 110 receives an image signal from the image supply source 200 in wired/wireless manner, and transmits such image signal to the image processor 120. The image receiver 110 may vary corresponding to the standard of a received image signal and embodiment of the image processing apparatus 100. For example, the image receiver 110 may receive a digital image signal according to high definition multimedia interface (HDMI).

The image processor 120 processes an image signal transmitted by the image receiver 110. The image processor 120 outputs the processed image signal to the display unit 130, which displays thereon the image signal.

The image processing operation of the image processor 120 may include decoding operation corresponding to an image format of an image signal, de-interlacing operation to convert an interlace image signal into a progressive image signal, a scaling operation to scale the image signal into a preset resolution, a noise reduction operation to improve the picture quality of the image signal, a detail enhancement operation and a frame refresh rate conversion operation, but not limited thereto.

The image processor 120 includes a system-on-chip (SoC) which integrates many functions, or includes individual elements performing each process independently. Such individual elements are mounted in a printed circuit board (PCB) and realized as an image processing board (not shown).

The display unit 130 displays an image thereon based on an image signal output to the image processor 120. The display unit 130 may include liquid crystal, plasma, light-emitting diode, organic light-emitting diode, surface-conduction electron-emitter, carbon nano-tube, nano crystal, but not limited thereto.

The display unit 130 may further include other elements depending on its embodiment. For example, if the display unit 130 is realized as a liquid crystal display (LCD), it may include an LCD panel (not shown), a backlight unit (not shown) to emit light to the LCD panel, and a panel driving circuit (not shown) to drive a panel (not shown).

The communication unit 140 is connected to an external network according to a preset wireless communication protocol. If the communication unit 140 is based on Wi-Fi protocol, the communication unit 140 performs interactive communication with the external network through the access point 300. The access point 300 corresponds to a particular frequency channel, and the connection between the communication unit 140 and the access point 300 is performed through the frequency channel.

The storage unit 150 stores therein unlimited data by a control of the controller 160. The storage unit 150 includes a non-volatile memory such as a flash memory, or a hard disc drive. The storage unit 150 is accessed by the controller 160, and data are read/recorded/modified/deleted/updated by the controller 160.

The controller 160 controls various elements of the image processing apparatus 100, e.g., an image processing operation of the image processor 120 or a communication operation of the communication unit 140. In particular, the controller 160 controls the communication unit 140 to be connected to the access point 300 through a particular frequency channel so that the image processing apparatus 100 is connected to the network.

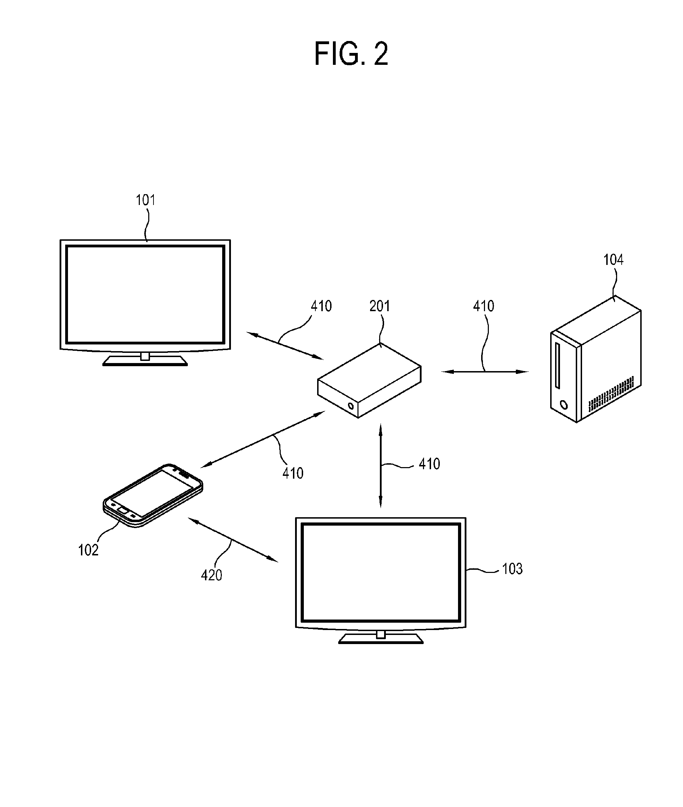

Hereinafter, connection of the image processing apparatuses 101, 102, 103 and 104 and another device based on Wi-Fi wireless communication protocol will be described with reference to FIG. 2. FIG. 2 illustrates an example of performing Wi-Fi protocol-based wireless communication by the image processing apparatuses 101, 102, 103 and 104.

As shown therein, Wi-Fi is an abbreviated name of "Wireless Fidelity" which is technical standard established by Institute of Electrical and Electronics Engineers (IEEE). Wi-Fi protocol is the standard established to guarantee compatibility of communication to enable wireless communication among different electronic devices.

Wi-Fi protocol-based communication is classified into an infrastructure mode 410 and an ad-hoc mode 420.

In the ad-hoc mode 420, the two devices 102 and 103 directly transmit and receive data therebetween without any particular communication relay device. As the ad-hoc mode 420 allows 1:1 communication between the devices 102 and 103, a plurality of devices 102, 102, 103 and 104 are connected to the network in the infrastructure mode 410.

In the infrastructure mode 410, wireless communication among the devices 101, 102, 103 and 104 requires the access point 201 which intermediates or relays such wireless communication. The access point 201 is provided corresponding to a particular frequency channel. The devices 101, 102, 103 and 104 are connected to the access point 201 through the frequency channel to communicate with other devices 101, 102, 103 and 104.

If a predetermined device 101 is newly connected to the network in the infrastructure mode 410 as shown in FIG. 2, the device 101 should identify a frequency channel through which the access point 201 relays wireless communication for the connection of the device 101 to the access point 201.

Determination of the particular frequency channel by the device 101 may include the following two methods.

Firstly, the device 101 may scan channels of available frequency bands to identify the frequency channel through which it is connected to the access point 201. In this case, scanning of all frequency bands is needed and thus scanning time and system load of the device 101 may be a problem.

Also, some countries protect particular frequency channel by various reasons including security issue, in which case, scanning the frequency channel may be a problem in that country.

Secondly, a frequency channel may be designated and stored corresponding to the access point 201 at the time of manufacturing the device 101, which is connected to the access point 201 according to the pre-stored frequency channel.

However, the frequency channel used by the access point 201 is designated variously depending on territory, more specifically, country. Each country designates several frequency channels out of entire frequency bands, and allows Wi-Fi wireless communication only for the designated frequency channel. The access point 201 performs the wireless communication through the frequency channel designated by the country.

Accordingly, if the frequency channel is designated in advance corresponding to the access point 201 at the time of manufacturing the device 101, the device 101 may not perform wireless communication based on Wi-Fi protocol in territories/countries other than the designated territories/countries. It is not favorable from the perspective of manufacturing of the device 100 since each frequency channel should be designated and stored for the device 101 by territory.

In consideration of the foregoing, the following configuration applies to the image processing apparatus 100 according to the exemplary embodiment of the present invention.

The controller 160 of the image processing apparatus 100 according to the present exemplary embodiment extracts territorial identification information from an image signal transmitted by the image receiver 110, and determines at least one frequency channel corresponding to the extracted territorial identification information. The controller 160 controls the communication unit 140 to perform wireless connection to the access point 300 through the at least one frequency channel according to the determination result.

Accordingly, wireless communication of the image processing apparatus 100 according to Wi-Fi protocol may be performed corresponding to various territories/countries.

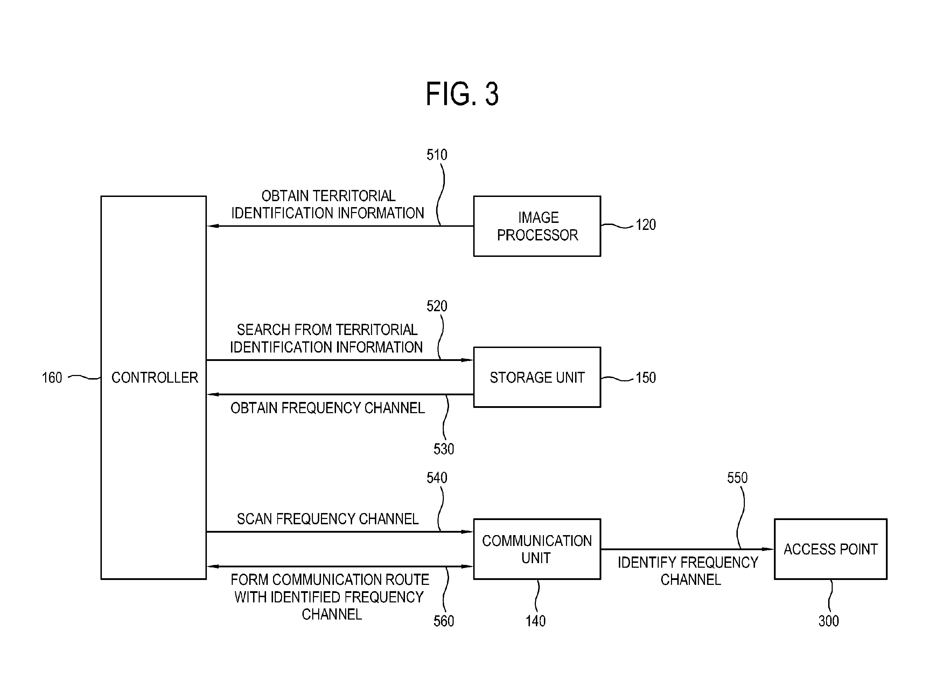

Hereinafter, Wi-Fi protocol-based wireless communication method of the image processing apparatus 100 according to the present exemplary embodiment will be described with reference to FIG. 3. FIG. 3 illustrates an example of initially connecting to the access point 300 by the image processing apparatus 100.

As shown therein, the controller 160 obtains the territorial identification information extracted from the image signal, from the image processor 120 (510). The territorial identification information is obtained by the following method.

Upon receiving a digital image signal from the image receiver 110, the image processor 120 classifies the digital image signal into image data, audio data and additional data during a demultiplexing process. The additional data include various meta information of the image signal. The controller 160 may obtain the territorial identification information included in the meta information.

A broadcasting signal which is according to digital video broadcasting (DVB) standard includes country availability descriptor. A country code field of the country availability descriptor includes a country code. Thus, the controller 160 may obtain the country code from the image processor 120.

If the territorial identification information of the image signal is obtained, the controller 160 accesses the storage unit 150. The storage unit 150 stores therein database including a plurality of territorial identification information and at least one frequency channel corresponding to each of the territorial identification information. Such database may be stored in the storage unit 150 during a manufacturing process of the image processing apparatus 100.

The controller 160 searches the database of the storage unit 150 with the obtained territorial identification information (520). As a result, the controller 160 obtains at least one frequency channel from the database corresponding to the territorial identification information (530).

The controller 160 scans the obtained frequency channel to thereby determine an available frequency channel which may be connected to the access point 300 through the communication unit 140 (540). That is, as the obtained frequency channel permits wireless connection in the territory where the image processing apparatus 100 is located, the controller 160 may expect that the frequency channel may include a channel which may be connected to the access point 300. The controller 160 determines whether the obtained frequency channel includes a channel that may be connected to the access point 300.

The controller 160 identifies the frequency channel through which the communication unit 140 and the access point 300 are connected, through the scanning process (550). The controller 160 forms a wireless communication route between the communication unit 140 and the access point 300 with the identified frequency channel (560).

Through the aforementioned process, the controller 160 may minimize system load and scanning time, and enable wireless communication between the communication unit 140 and the access point 300 corresponding to various territories.

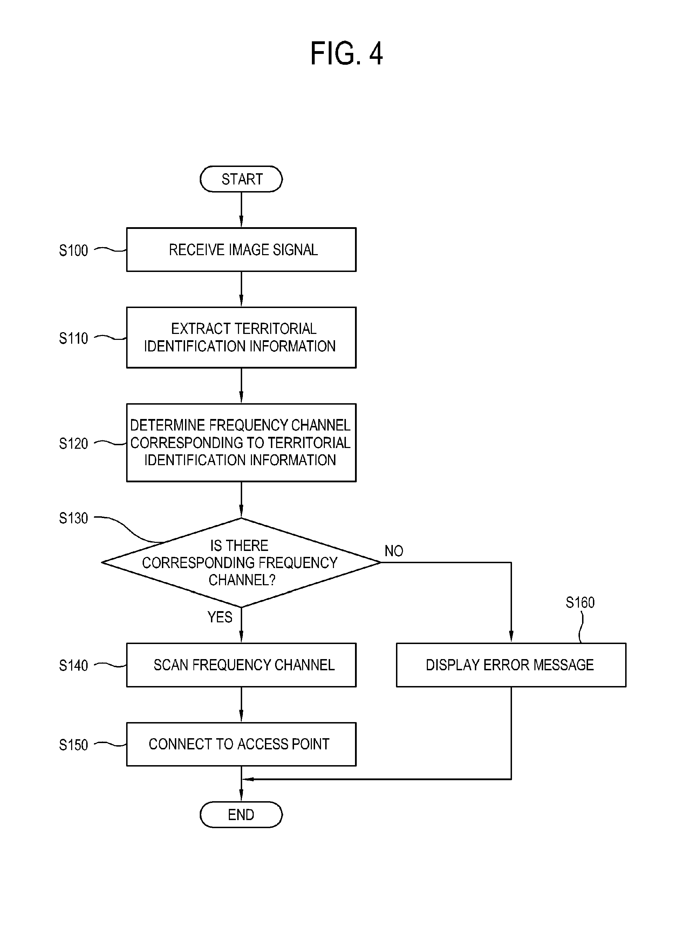

Hereinafter, a control method of the image processing apparatus 100 according to the exemplary embodiment of the present invention will be described with reference to FIG. 4. FIG. 4 is a control flowchart of the control method of the image processing apparatus 100.

As shown therein, the image processing apparatus 100 receives an image signal from the image supply source 200 (S100). The image processing apparatus 100 extracts the territorial identification information from the received image signal (S110), and determines at least one frequency channel corresponding to the extracted territorial identification information (S120).

If it is determined that there is a corresponding frequency channel (S130), the image processing apparatus 100 scans the frequency channel (S140). If the connection to the access point 300 through the particular frequency channel is available according to the scanning result, the image processing apparatus 100 is connected to the access point 300 through the particular frequency channel (S150).

If it is determined that there is no corresponding frequency channel (S130), the image processing apparatus 100 may display on the display unit 130 an error message to notify that the wireless communication is not available (S160).

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus comprising:
an image receiver which receives an image signal from an image supply source;
an image processor which processes the image signal received by the image receiver to display an image;
a communication unit which is wirelessly connected to an access point corresponding to a preset frequency channel to enable communication with an external network; and
a controller which determines at least one frequency channel corresponding to territorial identification information extracted from the image signal received by the image receiver, and controls wireless communication of the communication unit to the access point through the at least one determined frequency channel.

2. The image processing apparatus according to claim 1, wherein the controller scans a frequency channel that may be connected to the access point, out of the at least one determined frequency channel, and is connected to the access point for communication through the frequency channel according to the scanning result.

3. The image processing apparatus according to claim 1, further comprising a storage unit which stores therein database comprising a plurality of territorial identification information and at least one frequency channel corresponding to each of the plurality of territorial identification information, wherein the controller searches the at least one frequency channel corresponding to the territorial identification information extracted from the image signal, in the database of the storage unit.

4. The image processing apparatus according to claim 1, wherein the wireless communication of the communication unit to the access point is based on an infrastructure mode according to Wi-Fi protocol.

5. The image processing apparatus according to claim 1, wherein the territorial identification information comprises a country code.

6. The image processing apparatus according to claim 5, wherein the image signal which is received by the image receiver comprises a digital broadcasting signal transmitted by transmission equipment of a broadcasting station, and the controller determines the country code from a territorial code field within a country availability descriptor of the digital broadcasting signal.

7. The image processing apparatus according to claim 1, further comprising a display unit which displays an image by using the image signal processed by the image processor.

8. A control method of an image processing apparatus comprising:
receiving an image signal from an image supply source and processing the image signal to display an image;
extracting territorial identification information from the image signal and determining at least one frequency channel corresponding to the extracted territorial identification information; and
wirelessly connecting to an access point, which relays communication between the image processing apparatus and an external network, through the at least one determined frequency channel.

9. The control method according to claim 8, wherein the wirelessly connecting to the access point through the at least one determined frequency channel comprises scanning a frequency channel that may be connected to the access point, out of the at least one determined frequency channel; and
connecting to the access point for communication through the frequency channel according to the scanning result.

10. The control method according to claim 8, wherein the determining at least one frequency channel corresponding to the extracted territorial identification information comprises searching at least one frequency channel corresponding to the territorial identification information extracted from the image signal, in database comprising a plurality territorial identification information and at least one frequency channel corresponding to each of the plurality of territorial identification information.

11. The control method according to claim 8, wherein the wireless communication of the communication unit to the access point is performed in an infrastructure mode according to Wi-Fi protocol.

12. The control method according to claim 8, wherein the territorial identification information comprises a country code.

13. The control method according to claim 12, wherein the image signal which is received by the image receiver comprises a digital broadcasting signal transmitted by transmission equipment of a broadcasting station, and the determining the at least one frequency channel corresponding to the extracted territorial identification information comprises determining the country code from a territorial code field within a country availability descriptor of the digital broadcasting signal.
